Europäisches Patentamt

European Patent Office

Office européen des brevets

(11) Numéro de publication: **0 544 575 B1**

## FASCICULE DE BREVET EUROPEEN

(45) Date de publication du fascicule du brevet: **20.09.95** (51) Int. Cl.⁶: **G01D 5/20**, G01D 5/22, G01B 7/30

(21) Numéro de dépôt: **92403145.3**

(22) Date de dépôt: **23.11.92**

(54) **Capteur de position angulaire absolue à réluctance variable.**

(30) Priorité: **26.11.91 FR 9114577**

(43) Date de publication de la demande:
**02.06.93 Bulletin 93/22**

(45) Mention de la délivrance du brevet:
**20.09.95 Bulletin 95/38**

(84) Etats contractants désignés:
**DE ES GB IT SE**

(56) Documents cités:
**DE-A- 4 102 478**
**GB-A- 2 240 185**

**PATENT ABSTRACTS OF JAPAN vol. 7, no. 266 (P-239)(1411) 26 Novembre 1983 & JP-A-58147609**

(73) Titulaire: **SOCIETE D'APPLICATIONS GENERA-LES D'ELECTRICITE ET DE MECANIOUE S A G E M**
**6, Avenue d'Iéna**
**F-75783 Paris Cedex 16 (FR)**

(72) Inventeur: **Porcher, Yves**
**10, rue de Nieuport,**
**Le Plessis Bouchard**
**F-95130 Franconville (FR)**

(74) Mandataire: **Gorree, Jean-Michel et al**
**Cabinet Plasseraud**
**84, rue d'Amsterdam**
**F-75009 Paris (FR)**

EP 0 544 575 B1

## Description

La présente invention concerne, d'une façon générale, le domaine des capteurs de position angulaire absolue et, plus spécifiquement, elle concerne des perfectionnements apportés aux capteurs de position angulaire absolue à réluctance variable comprenant :

- au moins un détecteur statorique comportant
  . au moins une armature fixe en matériau ferromagnétique munie d'un tronçon de logement annulaire et s'étendant sur un secteur angulaire α, et
  . au moins une bobine annulaire abritée partiellement dans ledit logement annulaire,
- et au moins un organe rotorique en matériau ferromagnétique qui est situé en vis-à-vis de la bobine, en étant entraîné en rotation coaxialement à la bobine en regard de celle-ci,

On connaît déjà de nombreuses réalisations de dispositifs permettant d'assurer la fonction de détection de position angulaire absolue. Par exemple le capteur est constitué par une ou plusieurs armatures fixes bobinées (de type pots bobinés ou petits circuits en U bobinés) formant le stator et de parties tournantes (rotor sans bobines) et la fonction de détection est initiée par une variation locale de l'entrefer présent dans le ou les circuits magnétiques définis par le stator et le rotor. Des exemples de tels capteurs peuvent être trouvés notamment dans le document DE-A-24 32 032 qui décrit un capteur comportant un disque excentrique tournant face à une pluralité de bobines fixes à noyau, dans le document GB-A-1 245 697 qui décrit un capteur comportant un plateau à face inclinée tournant en regard d'une pluralité de bobines, dans le document FR-A-2 644 240 qui décrit des capteurs analogues aux précédents, et dans la demande de brevet FR 91 07 229 (FR-A-2677757) au nom de la Déposante qui décrit un capteur comportant une bague tournante à section radiale variable angulairement qui est engagée dans un détecteur en U.

Tous les éléments constitutifs du dispositif (circuits magnétiques fixes, bobines, circuit magnétique mobile, entrefers définis entre les circuits magnétiques fixes et mobile) sont très localisés géographiquement au sein du dispositif, et de ce fait l'élaboration du paramètre sensible (réluctance variable en fonction de la position angulaire) est, elle aussi, localisée dans l'espace : elle reste donc tributaire des défauts locaux de réalisation du circuit magnétique mobile (rotor), voire aussi de l'homogénéité locale du matériau constitutif de celui-ci. Les défauts mécaniques (qu'il s'agisse du rotor et/ou du stator) entraînent donc une dispersion des caractéristiques du signal électrique recueilli (défaut local du signal par rapport à un signal théorique) qui peut souvent être corrigée s'il s'agit d'un défaut générique du dispositif, mais qui est beaucoup plus difficile, voire impossible à corriger s'il s'agit d'un défaut ponctuel de fabrication et qui entraîne alors la présence, dans le signal recueilli, d'un signal de bruit perturbateur se superposant au signal utile.

Par ailleurs, la variation linéaire de la perméance (inverse de la réluctance), et donc de la self, en fonction de la position angulaire, qui peut être avantageusement recherchée dans ce genre de capteur, ne peut être obtenue dans la plupart des cas qu'en donnant aux pièces mécaniques en mouvement relatif -et notamment au rotor- des formes complexes (pièces tournantes à axe excentré, surfaces inclinées notamment). La fabrication de telles pièces particulières n'est pas simple, d'autant plus que des valeurs précises d'entrefer doivent être obtenues après montage, et est donc coûteuse.

Dans certains types de capteur, les détecteurs sont constitués par des petites bobines bobinées sur une armature en U. Ces bobines ne correspondent en principe à aucun bobinage standardisé et doivent donc être réalisées à la demande avec un outillage spécial ; il en résulte qu'elles sont d'un prix de revient très élevé.

Par ailleurs, le document DE-A-41 02 478 décrit dif-différents modes de réalisation de capteur de position angulaire absolue à réluctance variable dans lesquels une pièce tournante rotorique en forme de secteur circulaire fait face, axialement, au circuit magnétique statorique ; dans ces agencements connus, le flux magnétique passe axialement entre le rotor et le stator de sorte que toute variation de position relative axiale du rotor et du stator se traduit par une variation corrélative de la réluctance, et donc par un signal perturbateur correspondant qui affecte le signal de mesure en sortie du capteur. Ce capteur connu nécessite un usinage et un montage précis des pièces composantes pour réduire au maximum le signal perturbateur, et on a recours en outre à des moyens de filtrage pour tenter d'isoler au mieux le signal utile de mesure. Ce capteur est donc coûteux et, malgré les mesures prises, le signal de sortie n'est pas totalement exempt de perturbations.

L'invention a essentiellement pour objet de proposer un capteur de position angulaire absolue à réluctance variable de type perfectionné qui donne mieux satisfaction que les capteurs connus aux diverses exigences de la technique et qui, par sa structure et sa simplicité de fabrication, puisse être un appareil destiné à la grande diffusion tout en apportant des avantages technologiques jusqu'à présent réservés à des appareils de haut de gamme de coût relativement élevé.

A ces fins, un capteur de position angulaire absolue à réluctance variable tel que mentionné au préambule se caractérise essentiellement, étant agencé conformément à l'invention, en ce que l'organe rotorique comporte au moins un segment annulaire qui s'étend sur un secteur angulaire au plus égal à 360°-α et qui est situé en vis-à-vis de la bobine de manière telle que la circulation du flux magnétique s'effectue radialement entre le détecteur statorique et l'organe rotorique.

Dans un tel dispositif, la perméance est
- minimale lorsque le segment annulaire du rotor est situé à l'extérieur de l'armature fixe du stator,
- variable lorsque le segment annulaire est partiellement engagé dans l'armature fixe en occupant des positions asymétriques par rapport à celle-ci,
- et enfin maximale lorsque le segment annulaire est engagé entièrement dans l'armature fixe.

La courbe représentative de la variation de la perméance, et donc de la self, présente donc une succession de dents de scie dont la forme (pente, amplitude) et l'espacement mutuel dépendent notamment de la configuration géométrique de l'armature fixe et du segment annulaire tournant (valeurs relatives des angles α et β). Dans une configuration approximativement symétrique (α # β # 180°), le signal électrique a une allure en dent de scie continue, à sommets plus ou moins arrondis.

Du point de vue structurel, toutes les pièces sont coaxiales et la fabrication et le montage sont considérablement simplifiés d'autant plus que les formes particulières (faces inclinées) prévues dans certains capteurs antérieurs n'ont ici plus lieu d'être. Enfin, les bobines sont de conception traditionnelle.

D'une façon pratique, le logement annulaire de la bobine est constitué par une gorge annulaire creusée dans l'armature fixe qui présente alors la structure d'un secteur angulaire d'un pot ferromagnétique traditionnel.

De façon pratique, le segment annulaire tournant peut, au cours de sa rotation, être engagé dans le logement annulaire de l'armature statorique (conduisant à une réalisation plus compacte) ou bien rester extérieur à ce logement annulaire. Il en résulte donc une multiplicité d'agencements possibles qui permettent de satisfaire avec une grande souplesse toutes les exigences particulières.

Surtout, la structure fondamentale du capteur conforme à l'invention permet de façon simple de multiplier les cellules de détection. Ainsi, l'armature statorique peut comporter plusieurs logements annulaires et plusieurs bobines annulaires logées partiellement respectivement dans lesdits logements ; dans ce cas, on peut faire en sorte que l'armature statorique soit agencée de manière telle qu'au moins certains logements soient mutuellement décalés angulairement. De même, il est possible de faire en sorte que l'organe rotorique comporte plusieurs segments annulaires rotoriques associés inductivement respectivement avec les bobines ; dans ce cas, au moins certains segments annulaires peuvent être mutuellement décalés angulairement.

Là encore, cette multiplicité des agencements possibles permet de réaliser des capteurs répondant de façon précise à des besoins spécifiques. La multiplication des cellules permet de recueillir plusieurs signaux de sortie qui pourront être exploités de façon indépendante ou bien au contraire, en prévoyant des décalages angulaires mutuels des armatures fixes et/ou des segments annulaires notamment dans des positions circonférentiellement régulières (décalages à 180° pour deux cellules, 120° pour trois cellules, 90° pour quatre cellules par exemple), il est possible d'obtenir des signaux déphasés qui seront exploités en combinaison, par exemple pour s'affranchir des incertitudes sur la valeur de la position angulaire au voisinage des sommets des courbes (sommets arrondis) et pour n'exploiter que les zones centrales des rampes dont la linéarité est maximale.

Il est également possible de faire en sorte qu'à chaque bobine soient associées plusieurs armatures statoriques, les longueurs des divers tronçons de logement annulaire pouvant du reste ne pas être égaux (dans la suite de la description, on pourra désigner, pour simplifier, chaque tronçon de logement annulaire sous le nom -incorrect au sens propre- de "pôle"). Il est ainsi possible d'accroître la fréquence du signal électrique de sortie pour une vitesse de rotation donnée du rotor ou bien encore de combiner plusieurs informations dans un même signal.

On comprend aisément d'après ce qui précède que les inconvénients des capteurs antérieurs sont écartés dans le capteur de l'invention et que tous les avantages recherchés, mentionnés plus haut, sont obtenus. On peut toutefois ici mentionner un avantage supplémentaire concernant l'emploi de ces capteurs de position angulaire absolue en capteurs du type à transformateur différentiel variable tournant (RVDT). Les capteurs de l'art antérieur à deux paires de "pôles" conféraient une limite angulaire théorique de ± 45° tandis que le capteur de l'invention, avec une seule paire de "pôles", permet d'obtenir une limite de fonctionnement de ± 90°, soit un doublement de la plage angulaire de mesure de la machine.

L'invention sera mieux comprise à la lecture de la description qui suit de certains modes de réalisation donnés uniquement à titre d'exemples purement illustratifs, mais nullement limitatifs. Dans cette description, on se réfère aux dessins annexés sur lesquels :

- la figure 1 est une vue en perspective, en coupe, d'un premier mode de réalisation d'un capteur de position angulaire absolue agencé conformément à l'invention ;
- la figure 2 est une vue de dessus du capteur de la figure 1 ;
- les figure 3A, 3B et 3C sont des représentations schématiques des signaux électriques susceptibles d'être obtenus avec le capteur des figures 1 et 2 ;
- la figure 4 est une vue en perspective, en coupe diamétrale, d'une variante de réalisation du capteur des figures 1 et 2 ;
- la figure 5 est une vue de dessus du capteur de la figure 4 ;
- la figure 6 est une représentation schématique du signal électrique susceptible d'être obtenu avec le capteur des figures 4 et 5 ;
- les figures 7 et 8 sont des vues très schématiques, en coupe diamétrale, d'autres modes de réalisation possibles en variante de celui de la figure 1 ;
- la figure 9 est une vue très schématique, en coupe diamétrale, d'un capteur à plusieurs cellules agencé selon l'invention ;
- les figures 10 à 12 sont des schémas électriques illustrant différents montages électriques possibles pour l'exploitation du capteur de la figure 9 ;
- la figure 13 est une vue très schématique, en coupe diamétrale, d'un autre capteur à plusieurs cellules agencé selon l'invention ;
- la figure 14 est un schéma électrique illustrant un montage électrique possible du capteur de la figure 13 ;
- la figure 15 est une vue très schématique, en coupe diamétrale, d'encore une autre variante de capteur à plusieurs cellules agencé selon l'invention ;
- la figure 16 est une autre variante d'un capteur à plusieurs cellules concentriques, montré en coupe diamétrale ;
- la figure 17 est une vue schématique de dessus du capteur de la figure 16 ; et
- la figure 18 est une vue de dessus très schématique d'un capteur ou d'une cellule de capteur à plusieurs "pôles", selon l'invention.

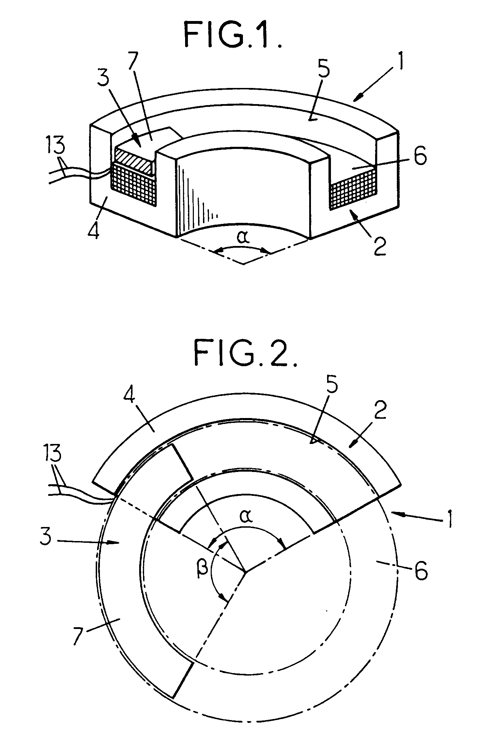

En se référant tout d'abord aux figures 1 et 2, un capteur de position angulaire absolue, désigné dans son ensemble par la référence numérique 1, comprend un stator 2 et un rotor 3 coaxiaux.

Le stator 2 comprend une armature fixe 4 en un matériau ferromagnétique, qui est en forme de segment annulaire s'étendant sur un angle $\alpha$. Cette armature est creusée d'un tronçon de gorge annulaire 5 s'étendant sur le même angle $\alpha$. L'ensemble offre donc l'aspect d'un pot ferromagnétique classique tronqué selon deux plans radiaux formant un angle $\alpha$.

Le tronçon de gorge 5 constitue un logement retenant une bobine annulaire complète 6 coaxiale au pot 4 et maintenue en position par tous moyens appropriés non représentés.

Le rotor 3 comprend une pièce allongée 7 en forme de segment annulaire, constituée en matériau ferromagnétique, qui s'étend sur un secteur angulaire $\beta$ au plus égal à $360°-\alpha$. Ce segment annulaire 7 est supporté, par des moyens non représentés, en regard de la bobine 6, coaxialement au logement 5, et de façon à être entraîné en rotation coaxialement au logement 5.

Dans l'exemple représenté aux figures 1 et 2, le segment annulaire 7 est engagé à l'intérieur de la gorge ou logement 5 et présente donc une largeur radiale sensiblement inférieure à la largeur radiale de la gorge 5. La construction ainsi obtenue offre l'avantage de présenter une dimension axiale (hauteur) relativement moindre et donc d'être compacte.

Comme cela apparaît sur les figures 1 et 2, la gorge 5 est ouverte en direction axiale (vers le haut sur les fig. 1 et 2).

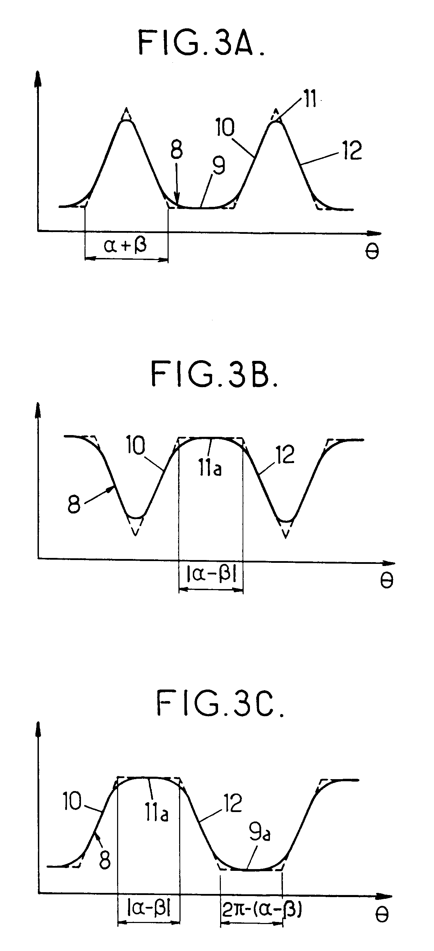

Le capteur 1 ainsi constitué forme une cellule à réluctance variable dont la perméance P, et par conséquent la self de la bobine 6, varie en dents de scie, comme représenté par la courbe 8 des figures 3A) à 3C). Sur la figures 3A : $\alpha = \beta$ avec $(\alpha + \beta) < 360°$. Tant que le segment annulaire rotorique 7 en cours de rotation est entièrement extérieur à l'armature statorique 4, la perméance est à sa valeur minimale -portion 9 de la courbe 8-. Dès que le segment annulaire rotorique commence à s'engager dans la gorge 5, la perméance croît (portion 10 de la courbe 8) jusqu'à une valeur maximale (partie 11 de la courbe 8) qui est atteinte lorsque le segment annulaire rotorique 7 est disposé complètement dans la gorge 5. Lorsque le segment 7 commence à quitter la gorge 5, la valeur de la perméance décroît (portion 12 de la courbe 8). Sous l'influence des effets de bord magnétiques, qui interviennent lorsque le segment annulaire rotorique 7 est sur le point d'entrer ou de sortie de la gorge 5, les changements de pente de la courbe 8 ne sont pas brusques (pointes), mais progressifs (formes arrondies).

Sur la figure 3B : $\alpha$ différent de $\beta$ avec $(\alpha + \beta) = 360°$. Si le segment annulaire rotorique 7 s'étend sur un angle $\beta$ différent de l'angle $\alpha$, la somme $\alpha + \beta$ étant égale à $360°$, la perméance atteint sa valeur maximale dès que le segment rotorique 7 est totalement engagé dans la gorge statorique 5 et conserve cette valeur maximale (courbe à valeur maximale plate 11a) tant que 1 segment 7 est totalement engagé dans la gorge 5.

Sur la figure 3C : $\alpha$ différent de $\beta$ avec $(\alpha + \beta) < 360°$. Dans le cas où les angles $\alpha$ et $\beta$ sont

différents, comme ci-dessus, mais leur somme étant inférieure à 360°, la perméance garde sa valeur maximale tant que le segment rotorique 7 est totalement engagé dans la gorge statorique 5 (courbe à valeur maximale plate 11a, comme ci-dessus), et la perméance garde sa valeur minimale tant que le segment rotorique 7 n'est pas engagé dans la gorge statorique 5 (courbe à valeur minimale plate 9a).

Avec une alimentation à courant efficace constant permettant d'obtenir, aux bornes 13 de la bobine 6, un signal électrique directement représentatif de la valeur de la self, et donc de la perméance, ledit signal électrique présente une amplitude qui varie en fonction de l'angle $\theta$ de position angulaire du rotor par rapport au stator selon une loi identique à celle de la perméance, décrite ci-avant.

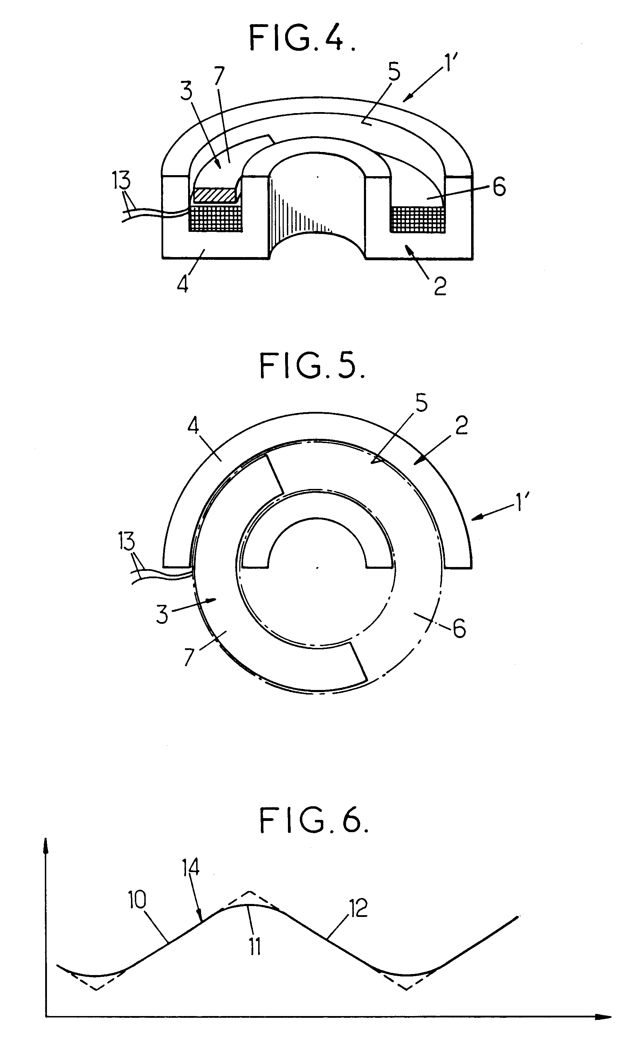

Les figures 4 et 5 (sur lesquelles on a conservé les mêmes références numériques pour désigner les organes identiques à ceux des figures 1 et 2) représentent un mode de réalisation particulier dans lequel $\alpha = \beta = 180°$. Autrement dit, le pot 4 est semi-annulaire et le segment 5 est, lui aussi, semi-annulaire. Le capteur 1' ainsi constitué offre l'avantage de délivrer un signal de sortie d'allure triangulaire (à pointes arrondies) correspondant à la courbe 14 de variation de la perméance de la figure 6. La grande amplitude obtenue grâce à ce montage offre l'avantage que la course présente des flancs croissants 10 et décroissants 12 comportant des portions linéaires importantes.

Bien entendu, la structure de base représentée aux figures 1 et 2 et aux figures 4 et 5 peut donner lieu à diverses variantes qui présentent des encombrements axiaux et/ou radiaux différents, alors que les signaux obtenus aux bornes de la bobine restent sensiblement identiques.

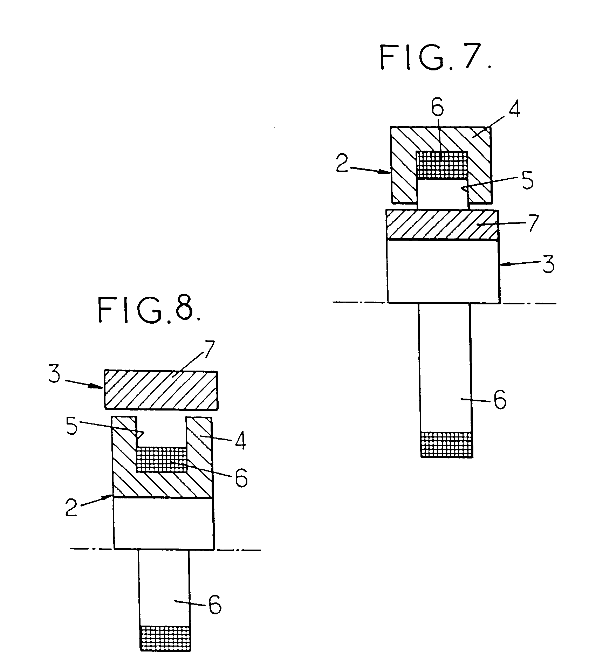

Ainsi, la figure 7 montre une variante dans laquelle le segment annulaire rotorique 7 est intérieur à l'armature fixe 4 ; la gorge 5 est ouverte radialement vers l'intérieur et le segment annulaire rotorique recouvre les bords de la gorge.

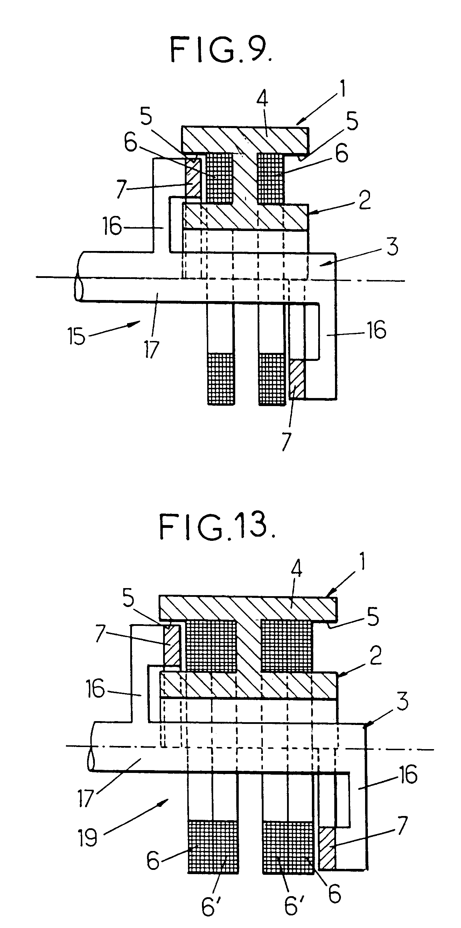

La figure 8 montre encore une autre variante dans laquelle le segment annulaire rotorique 7 est extérieur à l'armature fixe 4 ; la gorge 5 est ouverte radialement vers l'extérieur.

D'autres agencements sont encore possibles et l'on comprend dès lors la grande souplesse d'adaptation présentée par la structure de base permettant de satisfaire toutes les exigences d'applications particulières.

Cette structure de base offre en outre l'avantage très intéressant de pouvoir se prêter aisément à la réalisation de capteurs à plusieurs cellules, c'est-à-dire présentant un stator groupant plusieurs armatures mutuellement solidaires dans des positions angulaires prédéterminées fixes et un rotor commun groupant plusieurs segments annulaires rotoriques respectifs, eux-mêmes disposés dans des positions angulaires mutuelles fixes et, étant solidaires d'un arbre tournant commun, entraînés en rotation à la même vitesse angulaire.

Les signaux de sortie de chaque cellule du capteur peuvent alors être exploités individuellement de façon distincte ou bien au contraire, par un calage angulaire mutuel approprié des diverses armatures statoriques et/ou segments annulaires rotoriques, être exploités conjointement dans leurs plages linéaires respectives afin d'étendre la plage angulaire de fonctionnement du capteur.

La figure 9 montre un capteur 15 à deux cellules 1, du type de celles représentées aux figures 1 et 2 (ou aux figures 4 et 5), dont les armatures statoriques 4 sont montées coaxialement dos-à-dos et dont les deux segments annulaires rotoriques 7 sont supportés, par exemple par des bras radiaux 16, par un arbre rotorique commun 17, l'ensemble constituant le rotor 3. Dans l'exemple représenté, les deux armatures statoriques sont assemblées dans une position angulaire identique.

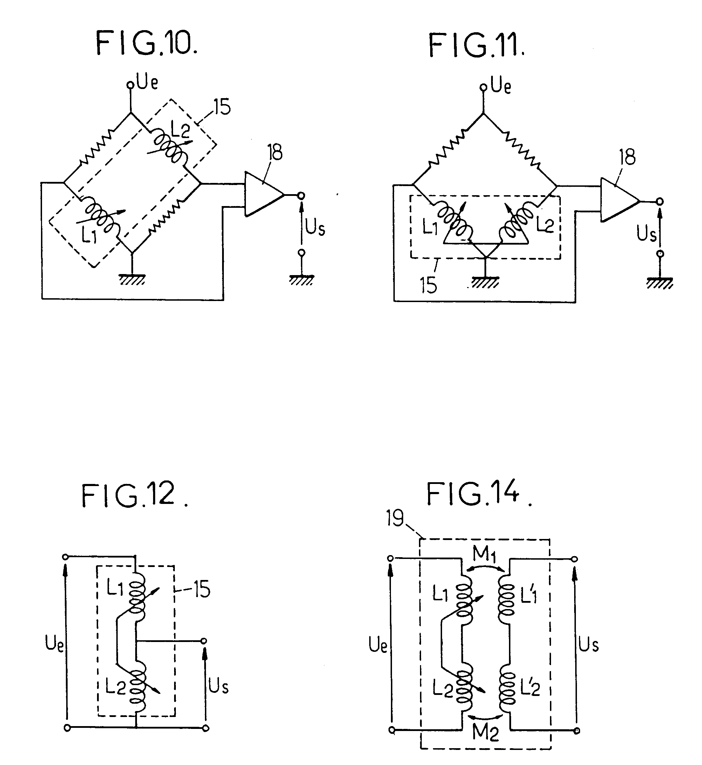

Les figures 10 à 12 et 14 représentent respectivement quatre circuits électriques illustrant divers montages possibles du capteur 15 de la figure 9 permettant d'effectuer divers types de détection.

La figure 10 montre un circuit en pont permettant d'effectuer une mesure différentielle. Les deux segments annulaires rotoriques 7, contrairement à ce qui est représenté sur la figure 9, sont disposés dans la même position angulaire sur l'arbre 17 (position en phase), de sorte que les deux signaux de sortie respectifs des deux cellules 1 du capteur 15 sont en phase électrique. Les deux bobines 6 (dont la self variable est désignée respectivement par L1 et L2 sur la fig. 10) sont respectivement incluses dans les deux branches opposées d'un pont et les deux signaux de sortie sont comparés dans un comparateur 18 fournissant un signal différentiel Us.

Pour le montage représenté à la figure 11, les deux segments annulaires rotoriques 7 du capteur 15 sont montés sur l'arbre 17 de façon à être diamétralement opposés (cas représenté sur la figure 9). Les signaux de sortie des deux cellules sont alors en opposition de phase. Les deux bobines 6 sont ici incluses dans deux branches consécutives d'un montage en pont et leurs signaux de sortie respectifs sont appliqués à un comparateur 18 qui fournit ainsi un signal différentiel Us dans les mêmes conditions que dans le montage de la figure 10.

Dans le montage représenté à la figure 12, les deux segments annulaires rotoriques 7 sont en opposition de phase (comme représenté à la figure 9) de sorte que la somme L1 + L2 reste constante. Les deux bobines 6 sont connectées en série aux bornes d'une source de tension Ue et le signal de sortie Us est mesuré aux bornes d'une des bobines 6. Ce montage permet une mesure ratiométrique ou "potentiométrique".

Le montage électrique de la figure 14 permet une exploitation du capteur pour une mesure du type transformateur différentiel s'apparentant au fonctionnement RVDT. Pour ce faire, le capteur 15 à deux cellules de la figure 9 conserve sa structure générale avec les deux segments annulaires rotoriques diamétralement opposés, à ceci près que chaque bobine 6 est dédoublée et remplacée par une bobine 6 située en regard du segment rotorique 7 associé et par une bobine 6' couplée par induction avec la précédente (voir le capteur 19 de la figure 13) ; les selfs sont respectivement désignées par L1 et L'1 pour un couple de bobine et L2 et L'2 pour l'autre couple de bobines sur la figure 14. Par rapport à un capteur RVDT de l'art antérieur, l'agencement conforme à l'invention offre l'avantage de la simplicité de réalisation, du reste caractéristique de la structure fondamentale du capteur de l'invention (circuits magnétiques massifs, bobines circulaires réalisables de façon indépendante du circuit magnétique, pièces de révolution), ainsi que l'avantage d'un doublement de la plage d'utilisation du fait que les signaux recueillis présentent une plage de linéarité d'environ 160° (au lieu d'environ 80° pour les capteurs antérieurs).

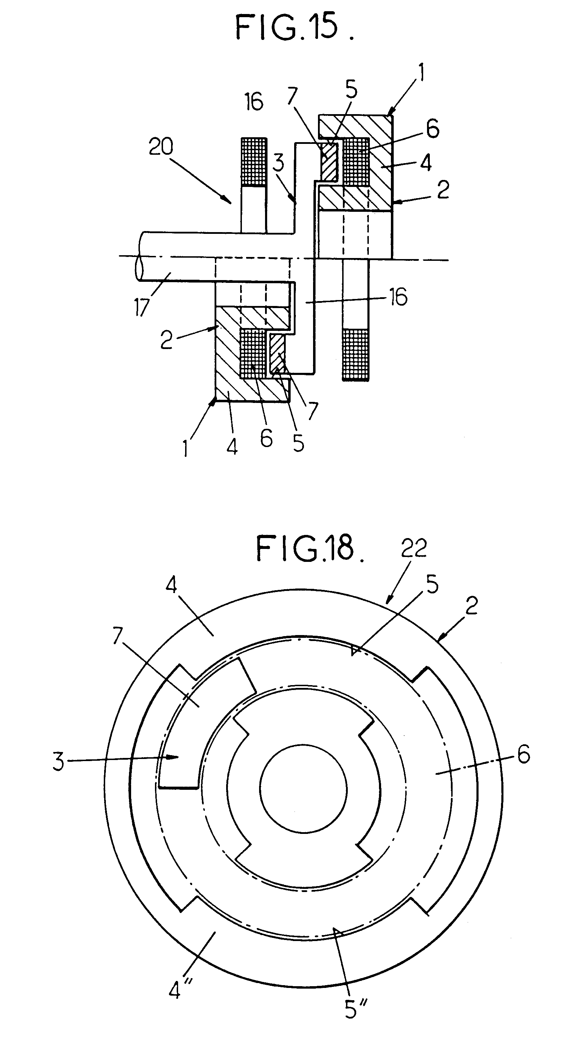

Toujours pour illustrer la souplesse d'adaptation de la structure du capteur de l'invention à des exigences particulières, on a représenté à la figure 15 une variante 20 du capteur 15 à double cellule de la figure 9, variante dans laquelle les deux armatures statoriques 4 ne sont plus dos-à-dos (figure 9), mais face à face et écartées axialement l'une de l'autre de sorte que les segments annulaires rotoriques 7 supportés par l'arbre 17 tournent entre elles. A titre d'exemple, les deux armatures sont disposées mutuellement décalées angulairement de 180° et les deux segments annulaires rotoriques 7 sont montés sur l'arbre 17 de façon diamétralement opposée (décalage de 180°), de sorte que les deux signaux de sortie respectifs des deux cellules sont en phase électrique. Le capteur 20 peut subir les mêmes adaptations structurelles que le capteur 15 de la figure 9 et être utilisé dans les mêmes conditions, de sorte que les schémas électriques des figures 10 à 12 et 14 lui sont également applicables.

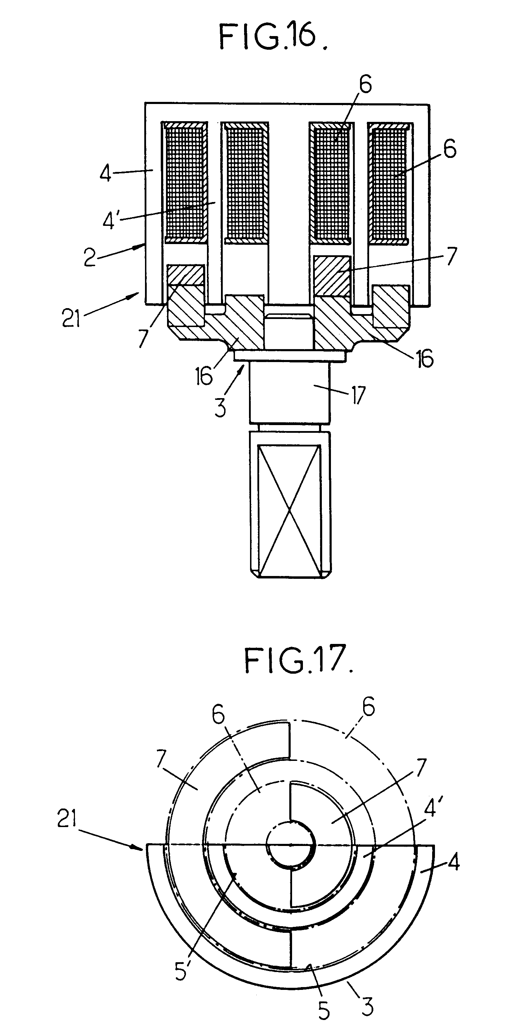

Les figures 16 et 17 représentent encore un autre capteur 21 à deux cellules dans lequel les deux cellules sont concentriques, et non plus juxtaposées axialement comme dans les modes de réalisation des figures 9, 13 et 15. A titre d'exemple, les deux armatures statoriques 4 et 4' sont en coïncidence angulaire tandis que les segments annulaires rotoriques sont diamétralement opposés. En outre, la figure 16 montre, de façon relativement détaillée et complète, un agencement concret du capteur 21, à titre d'exemple.

Les exemples donnés jusqu'à présent ont concerné des capteurs à deux cellules uniquement à titre d'exemple et il est entendu que les dispositions de l'invention permettent tout aussi bien de réaliser des capteurs comportant n'importe quel nombre (supérieur à 2) de cellules.

Par ailleurs, dans les exemples qui précèdent, chaque cellule de capteur met en oeuvre une armature statorique ou un "pôle" (au sens défini précédemment) et un segment annulaire rotorique. Toutefois, il est là encore entendu que la périodicité du signal obtenu en sortie de chaque cellule peut être accrue en augmentant le nombre des armatures statoriques (ou le nombre des "pôles") et/ou le nombre des segments annulaires du rotor, ceci pour chaque cellule. A titre d'exemple, la fréquence du signal de la figure 3 peut être doublée en remplaçant le segment annulaire rotorique 7 unique du capteur 1 par deux segments identiques diamétralement opposés associés à la même armature statorique à un seul "pôle" ou bien encore en remplaçant l'armature statorique unique ou armature à un seul "pôle" par deux armatures statoriques 4 et 4'' diamétralement opposées ou une armature à deux "pôles" diamétralement opposés, associées à un segment annulaire rotorique unique. La figure 18 montre schématiquement, en vue de dessus, un capteur 22 correspondant à ce dernier agencement. La combinaison de ces deux dispositions (deux segments annulaires rotoriques associés à une armature statorique à deux "pôles") pourrait aussi être utilisée.

On notera aussi qu'il est possible de constituer des capteurs regroupant plusieurs cellules de types différents.

Enfin, bien que, dans les explications qui précèdent, les armatures magnétiques de chaque cellule d'un capteur multicellulaire aient été considérées en tant que composant indépendant, en pratique ces armatures peuvent faire partie d'une carcasse magnétique monobloc unique conformée de manière à définir lesdites armatures avec leurs formes et leurs positionnement angulaire et radial requis.

Comme il va de soi et comme il résulte d'ailleurs déjà de ce qui précède, l'invention ne se limite nullement à ceux de ses modes d'application et de réalisation qui ont été plus particulièrement envisagés ; elle en embrasse, au contraire, toutes les variantes.

## Revendications

1. Capteur de position angulaire absolue à réluctance variable, comprenant :
   - au moins un détecteur statorique (2) comportant
     . au moins une armature fixe (4, 4', 4'') en matériau ferromagnétique munie d'un tronçon de logement annulaire (5, 5', 5'') et s'étendant sur un secteur angulaire α, et
     . au moins une bobine annulaire (6) abritée partiellement dans ledit logement annulaire,
   - et au moins un organe rotorique (3) en matériau ferromagnétique qui est situé en vis-à-vis de la bobine (6), en étant entraîné en rotation coaxialement à la bobine (6) en regard de celle-ci,
   caractérisé en ce que l'organe rotorique comporte au moins un segment annulaire (7) qui s'étend sur un secteur angulaire β au plus égal à 360°-α et qui est situé en vis-à-vis de la bobine (6) de manière telle que la circulation du flux magnétique s'effectue radialement entre le détecteur statorique (2) et l'organe rotorique (3).

2. Capteur selon la revendication 1, caractérisé en ce que le segment annulaire rotorique (7) est engagé dans le logement annulaire (5, 5', 5'') de l'armature statorique (4, 4, 4'').

3. Capteur selon la revendication 1, caractérisé en ce que le segment annulaire rotorique (7) est extérieur au logement annulaire (5, 5', 5'') de l'armature statorique.

4. Capteur selon l'une quelconque des revendications 1 à 3, caractérisé en ce que le segment annulaire rotorique (7) est situé en vis-à-vis de la bobine (6) selon une direction radiale.

5. Capteur selon l'une quelconque des revendications 1 à 3, caractérisé en ce que le segment annulaire rotorique (7) est situé en vis-à-vis de la bobine (6) selon une direction axiale.

6. Capteur selon l'une quelconque des revendications 1 à 5, caractérisé en ce que l'armature statorique (4, 4', 4'') comporte plusieurs logements annulaires (5) et plusieurs bobines annulaires (6) logées partiellement respectivement dans lesdits logements (5).

7. Capteur selon la revendication 6, caractérisé en ce que l'armature statorique (4, 4', 4'') est agencée de manière telle qu'au moins certains logements (5) soient mutuellement décalés angulairement.

8. Capteur selon la revendication 6 ou 7, caractérisé en ce que l'organe rotorique (3) comporte plusieurs segments annulaires rotoriques (7) associés inductivement respectivement avec les bobines (6).

9. Capteur selon la revendication 8, caractérisé en ce que au moins certains segments annulaires rotoriques (7) sont mutuellement décalés angulairement.

10. Capteur selon l'une quelconque des revendications 6 à 9, caractérisé en ce que les segments annulaires rotoriques (7) sont solidaires d'un même arbre tournant d'entraînement (17).

11. Capteur selon l'une quelconque des revendications 1 à 10, caractérisé en ce que chaque logement (5) s'étend sur un secteur angulaire (α) d'environ 180°.

12. Capteur selon l'une quelconque des revendications 1 à 11, caractérisé en ce que chaque segment annulaire rotorique (7) s'étend sur un secteur angulaire (β) d'environ 180°.

13. Capteur selon l'une quelconque des revendications 1 à 12, caractérisé en ce qu'à chaque bobine (6) sont associées plusieurs armatures statoriques (4, 4', 4'').

14. Capteur selon la revendication 13, caractérisé en ce que la pluralité d'armatures statoriques (4, 4', 4'') est constituée sous forme d'une unique carcasse magnétique monobloc.

15. Capteur selon l'une quelconque des revendications 1 à 14, caractérisé en ce qu'à chaque bobine (6) sont associés plusieurs segments annulaires rotoriques (7).

## Claims

1. A variable reluctance absolute angular position sensor, comprising :
   - at least one stator detector (2) comprising :
     . at least one stationary magnetic circuit (4, 4',4'') of ferromagnetic material provided with a length of annular housing (5, 5', 5''), and extending over an angular sector α, and
     . at least one annular winding (6) housed in part in said annular housing,

- and at least one rotor unit (3) of ferromagnetic material which is facing the winding (6) and which is rotated coaxially with the winding (6) which is facing, characterised by that the rotor unit comprises at least one annular segment (7) which extends over an angular sector $\beta$ of no more than 360° - $\alpha$, and which is facing the winding (6) in such a manner that the magnetic flow passes radially between the stator detector (2) and the rotor unit (3).

2. A sensor according to claim 1, characterized in that the annular rotor segment (7) is engaged in the annular housing (5, 5', 5'') of the stator magnetic circuit (4, 4', 4'').

3. A sensor according to claim 1, characterized in that the annular rotor segment (7) lies outside the annular housing (5, 5', 5'') of the stator magnetic circuit.

4. A sensor according to anyone of claims 1 to 3, characterized in that the annular rotor segment (7) is located facing the winding (6) in a radial direction.

5. A sensor according to anyone of claims 1 to 3, characterized in that the annular rotor segment (7) is located facing the winding (6) in an axial direction.

6. A sensor according to any one of claim 1 to 5, characterized in that the stator magnetic circuit (4, 4', 4'') comprises a plurality of annular housings (5) and a plurality of annular windings (6) partially received in respective ones of said housings (5).

7. A sensor according to claim 6, characterized in that the stator magnetic circuit (4, 4', 4'') is arranged in such a manner that at least some of the housings (5) are mutually offset angularly.

8. A sensor according to claim 6 or 7, characterized in that the rotor unit (3) includes a plurality of annular rotor segments (7) inductively associated respectively with the windings (6).

9. A sensor according to claim 8, characterized in that at least some of the annular rotor segments (7) are mutually offset angularly.

10. A sensor according to any one of claims 6 to 9, characterized in that the annular rotor segments (7) are secured to a common rotary drive shaft (17).

11. A sensor according to any one of claims 1 to 10, characterized in that each housing (5) extends over an angular sector ($\alpha$) of about 180°.

12. A sensor according to any one of claims 1 to 11, characterized in that each annular rotor segment (7) extends over an angular sector ($\beta$) of about 180°.

13. A sensor according to any one of claims 1 to 12, characterized in that each winding (6) is associated with a plurality of stator magnetic circuits (4, 4', 4'').

14. A sensor according to claim 13, characterized in that the plurality of stator magnetic circuits (4, 4', 4'') is constituted in the form of a single one-piece magnetic core.

15. A sensor according to any one of claims 1 to 14, charactzrized in that a plurality of annular rotor segments (7) are associated with each winding (6).

**Patentansprüche**

1. Sensor zur Erfassung der absoluten Winkelstellung mit variabler Reluktanz mit
   - wenigstens einem Stator-Detektor (2), der wenigstens einen festen mit einem ringförmigen Aufnahmestück (5,5',5'') ausgerüsteten Anker (4,4',4'') aus ferromagnetischem Material aufweist und sich über einen winkelförmigen Sektor ($\alpha$) erstrecht, und der wenigstens eine ringförmige, bereichsweise in der ringförmigen Aufnahme geschützte Spule (6) aufweist,
   - und mit wenigstens einem Rotor-Organ (3) aus ferromagnetischem Material, welches gegentiberliegend zur Spule (6) angeordnet ist und koaxial der Spule (6) gegenüberliegend in Drehbewegung angetrieben wird,
   dadurch gekennzeichnet,
   daß das Rotor-Organ wenigstens ein ringförmiges Segment (7) aufweist, welches sich auf einem winkelförmigen Sektor ($\beta$) höchstens gleich 360° - $\alpha$ erstreckt und derart gegenüberliegend zur Spule (6) angeordnet ist, daß die Zirkulation des magnetischen Flusses radial zwischen dem Stator-Detektor (2) und dem Rotor-Organ (3) erfolgt.

**2.** Sensor nach Anspruch 1,
dadurch gekennzeichnet,
daß das ringförmige Rotor-Segment (7) in die ringförmige Aufnahme (5,5',5'') des Stator-Ankers (4,4',4'') eingreift.

**3.** Sensor nach Anspruch 1,
dadurch gekennzeichnet,
daß das ringförmige Rotor-Segment (7) außerhalb der ringförmigen Aufnahme (5,5',5'') des Stator-Ankers ist.

**4.** Sensor nach irgendeinem der Ansprüche 1 bis 3,
dadurch gekennzeichnet,
daß das ringförmige Rotor-Segment (7) gegenüberliegend zur Spule (6) entlang einer radialen Richtung gelegen ist.

**5.** Sensor nach irgendeinem der Ansprüche 1 bis 3,
dadurch gekennzeichnet,
daß das ringförmige Rotor-Segment (7) gegenüberliegend zur Spule (6) entlang einer axialen Richtung gelegen ist.

**6.** Sensor nach irgendeinem der Ansprüche 1 bis 5,
dadurch gekennzeichnet,
daß der Statoranker (4,4',4'') mehrere ringförmige Aufnahmen (5) und mehrere ringförmige Spulen (6) aufweist, die jeweils bereichsweise in den Aufnahmen (5) aufgenommen sind.

**7.** Sensor nach Anspruch 6,
dadurch gekennzeichnet,
daß der Statoranker (4,4',4'') derart angeordnet ist, daß wenigstens bestimmte Aufnahmen (5) gegenseitig winkelförmig ausgelenkt sind.

**8.** Sensor nach Anspruch 6 oder 7,
dadurch gekennzeichnet,
daß das Rotor-Organ (3) mehrere ringförmige Rotor-Segmente (7) aufweist, die jeweils induktiv mit den Spulen (6) verbunden sind.

**9.** Sensor nach Anspruch 8,
dadurch gekennzeichnet,
daß wenigstens bestimmte ringförmige Rotor-Segmente (7) gegenseitig winkelförmig ausgelenkt sind.

**10.** Sensor nach irgendeinem der Ansprüche 6 bis 9,
dadurch gekennzeichnet,
daß die ringförmigen Rotor-Segmente (7) fest mit einer selben Antriebswelle (17) verbunden sind.

**11.** Sensor nach irgendeinem der Ansprüche 1 bis 10,
dadurch gekennzeichnet,
daß jede Aufnahme (5) sich auf einem winkelförmigen Sektor ($\alpha$) von ungefähr 180° erstreckt.

**12.** Sensor nach irgendeinem der Ansprüche 1 bis 11,
dadurch gekennzeichnet,
daß jedes ringförmige Rotor-Segment (7) sich auf einem winkelförmigen Sektor ($\beta$) von ungefähr 180° erstreckt.

**13.** Sensor nach nach irgendeinem der Ansprüche 1 bis 12,
dadurch gekennzeichnet,
daß mit jeder Spule (6) mehrere Statoranker (4,4',4'') verbunden sind.

**14.** Sensor nach Anspruch 13,
dadurch gekennzeichnet,
daß die Mehrzahl von Statorankern (4,4',4'') in Form einer einstückigen, magnetischen Karkasse angeordnet ist.

**15.** Sensor nach irgendeinem der Ansprüche 1 bis 14,
dadurch gekennzeichnet,
daß mit jeder Spule (6) mehrere ringförmige Rotor-Segmente (7) verbunden sind.

# FIG.1.

# FIG.2.

# FIG.3A.

# FIG.3B.

# FIG.3C.

# FIG.4.

# FIG.5.

# FIG.6.

EP 0 544 575 B1

FIG.7.

FIG.8.

13

# FIG.9.

# FIG.13.

14

FIG.10.

FIG.11.

FIG.12.

FIG.14.

# FIG.15 .

# FIG.18 .

# FIG.16.

# FIG.17.